# EUROPÄISCHE PATENTSCHRIFT

(11) **EP 0 649 778 B1**
(45) Veröffentlichungstag und Bekanntmachung des Hinweises auf die Patenterteilung: **04.02.1998**
(21) Anmeldenummer: 94107731.5
(22) Anmeldetag: 19.05.1994
(51) Int. Cl.: B60R 21/08

(54) **Sicherheitsnetzanordnung**
Security net installation
Installation d'un filet de sécurité

(30) Priorität: 25.10.1993 DE 4336380
(43) Veröffentlichungstag der Anmeldung: 26.04.1995
(73) Patentinhaber: Baumeister + Ostler GmbH & Co., 73773 Aichwald (DE)
(72) Erfinder: Ament, Eduard, D-73773 Aichwald 2 (DE)
(74) Vertreter: Rüger, Rudolf, Dr.-Ing.

(56) Entgegenhaltungen:
- EP-A- 0 467 340
- DE-A- 4 010 209
- GB-A- 1 195 445
- ATZ, Bd.88, Nr.11, November 1986, STUTTGART,W. GERMANY Seiten 641- - 648 SCHAPER ET AL. 'SCHUTZ DER INSASSEN VOR EINDRINGENDER LADUNG BEIM UNFALL'

## Beschreibung

Aus der DE-A-40 10 209 ist eine Sicherheitsnetzanordnung bekannt, die verhindern soll, daß im Falle eines Frontalaufpralls Gegenstände aus dem Laderaum eines Kombi-PKW in den Fahrgastraum geschleudert werden und dort Personen verletzen. Diese bekannte Sicherheitsnetzanordnung besteht aus einem Sicherheitsnetz, das längs einer Kante an einer Wickelwelle befestigt ist, die in einem an der Rücksitzlehne zu befestigenden Gehäuse drehbar gelagert ist. Die gegenüberliegende Kante der Sicherheitsnetzanordnung ist mit einer Schlaufe versehen, durch die hindurch eine rohrförmige Zugstange führt, aus deren beiden stirnseitigen Enden pilzförmige Halteglieder vorstehen. Die pilzförmigen Halteglieder sind in der Zugstange längsverschieblich und werden mit den pilzförmigen Köpfen in entsprechende Aufnahmetaschen unterhalb des PKW-Daches eingehängt.

Im Anschluß an die pilzförmigen Köpfe ist jedes Halteglied mit einem zylindrischen Schaft versehen, der an seinem in der Zugstange steckenden Ende sich radial kegelförmig erweitert. Zwei Gruppen von in die Zugstange eingeprägten Sicken vermindern die lichte Weite der Zugstange auf den Außendurchmesser des zylindrischen Schaftes, so daß auch die Auswärtsbewegung der Halteglieder durch das Anstoßen der kegelstumpfförmigen Verdickung an die am weitestens innenliegende Gruppe von Sicken begrenzt ist. Sollte jedoch infolge eines Auffahrunfalls ein Gegenstand aus dem Laderaum gegen das Sicherheitsnetz geschleudert werden, biegt sich die Zugstange durch und bei weiter ansteigender Kraft drücken die kegelförmigen Verdickungen die unmittelbar benachbarte Gruppe von Sicken radial nach außen, wodurch Aufprallenergie in Verformungsarbeit umgesetzt wird, um das Sicherheitsnetz gegen Reißen zu schützen.

Die bekannte Anordnung hat sich hinsichtlich der von ihr erbrachten Schutzfunktion in der Praxis sehr gut bewährt. Es bestehen jedoch gewisse fertigungstechnische Einschränkungen.

Die Wandstärke des für die Zugstange verwendeten Rohres ergibt sich letztlich aus der Knicksteifigkeit, die im Einsatzfalle gefordert wird. Die Wandstärke richtet sich nach der Breite des Sicherheitsnetzes und beeinflußt somit die Stabilität der Sicken und folglich auch die aufzubringende Arbeit beim Umformen der Sicken, wenn die kraftbegrenzende Wirkung auftritt. Die kraftbegrenzende Wirkung sollte dagegen von der Breite des Sicherheitsnetzes weitgehend unabhängig sein.

Bei der bekannten Lösung können die Sicken erst eingeprägt werden, nachdem die Halteglieder in die Zugstange eingeschoben sind. Dies bedeutet, daß beim Einprägen ohne Matrize gearbeitet werden muß, so daß verhältnismäßig große Toleranzen auftreten, die wiederum zu Toleranzen bei der Energieaufnahme führen. Die auftretenden Toleranzen beim Einprägen der Sicke in Verbindung mit der geforderten radialen Tiefe der Sicken, um die gewünschte, kraftbegrenzende Wirkung zu erbringen, kann leicht dazu führen, daß der Schaft des Haltegliedes zu viel Radialspiel hat und Klappergeräusche entstehen können.

Schließlich muß die kegelförmige Verdickung als getrenntes Teil gefertigt werden, das nachträglich auf den Schaft des Haltegliedes aufgesetzt wird. Hierdurch erhöhen sich die Herstellungskosten nicht unbeträchtlich.

Ausgehend hiervon ist es Aufgabe der Erfindung, eine Sicherheitsnetzanordnung zu schaffen, die bei kostengünstiger Fertigung eine weitgehend klapperfreie Lagerung der Halteglieder ermöglicht.

Diese Aufgabe wird erfindungsgemäß mit einer Sicherheitsnetzanordnung mit den Merkmalen des Anspruches 1 gelöst.

Die Verwendung des rohrförmigen Einsatzstückes gestattet es, zunächst das Halteglied und das Einsatzstück einfach vorzufertigen und nach der so erreichten Vormontage in den entsprechenden Hohlraum der Befestigungseinrichtung einzustecken und dort zu sichern. Die getrennte Herstellung des Einsatzstückes gestattet eine enge Tolerierung der Öffnung, bezogen auf den Schaft des Haltegliedes, womit Klappergeräusche ausgeschlossen sind. Außerdem gestattet die neue Konstruktion ohne weiteres die Kombination mit Energie verzehrenden Mitteln, die beim Aufprall die kinetische Energie von in dem Netz sich fangenden Teilen in Verformungsarbeit umsetzen. Diese Energie verzehrenden Mittel können zwischen dem Einsatzstück und dem Halteglied wirksam sein bzw. sich in Verlängerung des Einsatzstückes in Richtung auf die Mitte der stabförmigen Befestigungseinrichtung befinden.

Sehr einfache konstruktive Verhältnisse und eine kostengünstige Fertigung werden erreicht, wenn die Befestigungseinrichtung von einem zylindrischen Rohr gebildet ist, in das endseitig wenigstens ein Einsatzstück eingesetzt ist. Es ist durchaus möglich, das andere Ende der Befestigungseinrichtung mit einem starren unbeweglichen Halteglied zu versehen und lediglich an einem Ende die bewegliche Führung des Haltegliedes zwecks Ausgleichs von Karosserietoleranzen vorzusehen.

Klappergeräusche werden weiter vermieden, wenn mit Hilfe eines Federgliedes das bewegliche Halteglied in dem Einsatzstück in eine Endlage vorgespannt wird, also beispielsweise in die vollständig eingezogene Stellung oder in die vollständig vorgeschobene Stellung. Das Federglied kann hierzu in einem entsprechend erweiteren Abschnitt der Öffnung des Einsatzstückes sitzen.

Da in aller Regel die pilzförmigen Köpfe der Halteglieder abgewinkelt angeordnet sind, ist es von Vorteil, wenn das betreffende Halteglied drehgesichert in dem Einsatzstück sitzt. Hierzu kann eine Drehsicherung, bestehend aus einer Nut in dem Einsatzstück und einem radialen Vorsprung oder Fortsatz, an dem Schaft des Haltegliedes verwendet werden.

Das Fixieren des Einsatzstückes in der stabförmigen Befestigungseinrichtung erfolgt am einfachsten, indem Sicken in die Befestigungseinrichtung eingeprägt werden, die in entsprechende Vertiefungen oder Ausnehmungen am Außenumfang des Einsatzstückes eingreifen.

Das oben bereits erwähnte Energie verzehrende Mittel besteht im einfachsten Falle aus einem Deformationskörper in Gestalt eines Rohres oder einer Hülse, die auf dem von dem äußeren Ende des Einsatzstückes abliegenden Ende angeordnet ist,und durch die der Schaft des Haltegliedes durchführt. An diesem durch den Deformationskörper durchführenden Ende ist der Schaft mit einer Verdickung versehen. Eine solche Verdickung läßt sich sehr einfach durch Ausstülpungen erreichen, die durch Einquetschen des Schaftes entstehen. Sie werden erhalten, indem zwei zylindrische Werkzeuge aufeinander zu bewegt werden und Material am Umfang des Schaftes beim Annähern der Werkzeuge radial aneinander nach außen gedrängt wird.

Der Deformationskörper kann von dem Einsatzstück getrennt ein eigenes Bauteil sein oder mit ihm zu einem Bauteil, vorzugsweise einstückigen Bauteil vereinigt sein. Im Falle des einstückigen Bauteiles besteht die Möglichkeit, den Deformationskörper und das Einsatzstück aus Kunststoff zu spritzen, beispielsweise aus Nylon, Polypropylen oder einem anderen geeigneten Thermoplast mit oder ohne Füllung.

Ein progressiver Kraftanstieg läßt sich erreichen, wenn die Öffnung in dem Deformationskörper sich in Richtung auf das Einsatzstück kegelig verjüngt.

In der Zeichnung ist ein Ausführungsbeispiel des Gegenstandes der Erfindung dargestellt. Es zeigen:
- Fig. 1: das zwischen dem Dach eines Kraftfahrzeuges und der Rücklehne aufgespannte Sicherheitsnetz in einer perspektivischen Darstellung mit teilweise aufgebrochener Fahrzeugkarosserie,
- Fig. 2: ein Ende der Zugstange des Sicherheitsnetzes nach Fig. 1 in einer perspektivischen Darstellung teilweise aufgebrochen,
- Fig. 3: das Ende der Zugstange gemäß Fig. 2 mit teilweise eingeschobenem Halteglied in einem axialen Längsschnitt,
- Fig. 4: das Ende der Zugstange gemäß Fig. 3 in einem Querschnitt IV-IV,
- Fig. 5: eine andere Ausführungsform des Endes der Zugstange mit auf Zug belastetem Halteglied in einem axialen Schnitt,
- Fig. 6: das Ende der Zugstange nach Fig. 5 in einem Querschnitt längs der Linie VI-VI nach Fig. 5,
- Fig. 7: das Ende der Zugstange gemäß Fig. 5 nach der Deformation,
- Fig. 8: eine andere Ausführungsform des Endes der Zugstange gemäß Fig. 1 mit separatem Deformationskörper in einem axialen Längsschnitt und
- Fig. 9: die Anordnung aus Fig. 8 nach der Deformation.

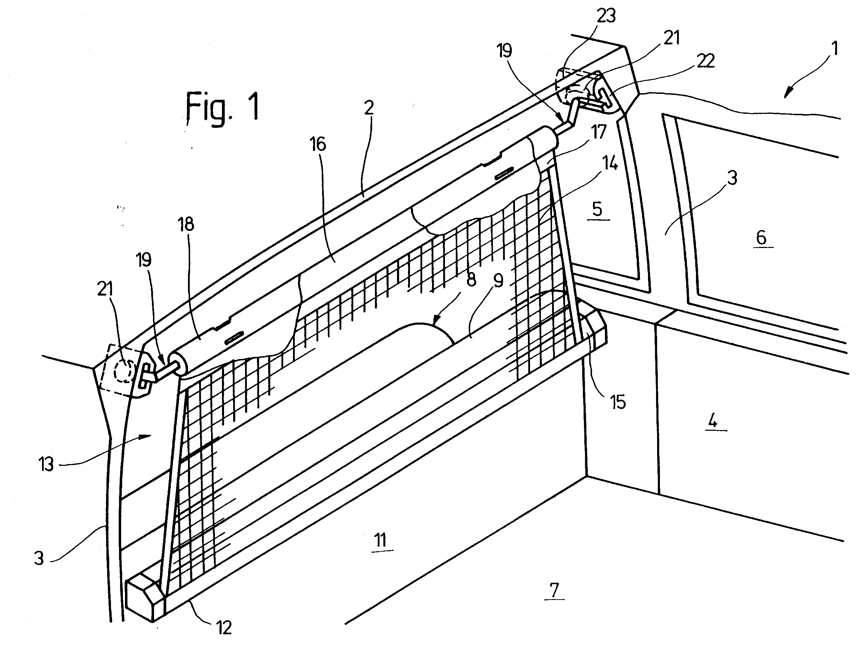

Fig. 1 zeigt in aufgebrochener Darstellung einen Heckbereich 1 eines Kombi-PKWs. Der Heckbereich 1 ist perspektivisch etwa aus der Sicht des linken seitlichen Heckfensters dargestellt und weist ein Dach 2 auf, das seitliche von zwei C-Säulen 3 getragen wird. Vor der C-Säule 3 liegt unterhalb des Daches 2 und oberhalb der Seitenfront 4 ein hinteres Seitenfenster 5, während dahinter ein hinteres Seitenfenster 6 angeordnet ist. Die Anordnung der Seitenfenster 5 und 6 ist an der linken Seite des Heckbereiches spiegelbildlich zu der erkennbaren rechten Seite. Nach unten wird der Heckbereich 1 von einer im wesentlichen ebenen Ladefläche 7 abgeschlossen.

Zwischen den beiden hinteren Seitenfenster 5 befindet sich eine Rücksitzbank 8, deren Rücksitzlehne 9 mit einer Rückseite 11 etwa zwischen den beiden C-Säulen 3 steht. An der Rückseite 11 der Rücksitzlehne 9 ist ein längliches Gehäuse 12 einer Sicherheitsnetzanordnung 13 angebracht, und zwar etwa horizontal verlaufend, wobei sich das Gehäuse 12 praktisch über die gesamte Breite der Rücksitzlehne 9 erstreckt. In dem länglichen kastenförmigen Gehäuse 12 ist in bekannter Weise eine Wickelwelle drehbar gelagert, an der mit einer Längskante ein Sicherheitsnetz 14 befestigt ist, das durch einen Schlitz 15 in dem Gehäuse 12 wahlweise herausziehbar bzw. in das Gehäuse 12 einzufahren ist. Zum Einfahren ist die in dem Gehäuse 12 gelagerte Wickelwelle mit Hilfe eines Federmotors im Sinne des Aufwickelns des Sicherheitsnetzes 14 vorgespannt. Das Sicherheitsnetz 14 weist eine parallel zu der Wickelwelle in dem Gehäuse 12 verlaufende Vorderkante 16 auf, die mit einer über die Länge der Vorderkante 16 sich erstreckenden Schlaufe 17 versehen ist. In der Schlaufe 17 steckt eine rohrförmige Zugstange 18, aus der beidenends zwei Halteglieder 19 herausragen. Die Halteglieder 19 sind an ihren freien Enden mit pilzförmigen Köpfen 21 versehen, die bei aufgespanntem Sicherheitsnetz 14 in T-Nuten 22 von taschenförmigen Aufnahmen 23 eingesetzt sind. Die taschenförmigen Aufnahmen 23 befinden sich knapp unterhalb des Daches 2 etwa auf der Höhe der Rückseite 11 innerhalb des Heckbereiches 1.

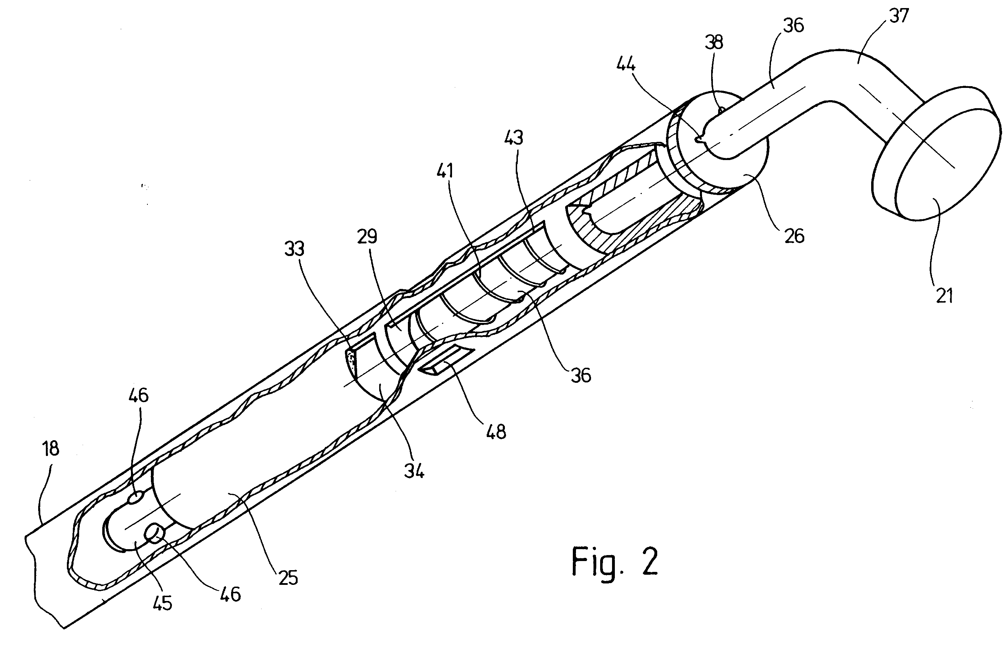

Die Art der Lagerung der Halteglieder 19 in der rohrförmigen Zugstange 18 ergibt sich aus den Fig. 2 bis 4. Hiernach steckt in dem verhältnismäßig dünnwandigen Rohr, das die Zugstange 18 bildet, ein zylindrisches rohrförmiges Einsatzstück 24, an das einstückig ein ebenfalls rohrförmiger Deformationskörper 25 angeformt ist. Beide, das Einsatzstück 24 und der Deformationskörper 25, haben eine zylindrische Außenumfangsfläche, die der lichten Weite des die Zugstange 18 bildenden Rohres entspricht, so daß sie im wesentlichen ohne Radialspiel in der Zugstange 18 sitzen. An dem vorderen außen liegenden Ende des Einsatzstückes 24 ist ein Ringbund 26 angeformt, der im montierten Zustand an der freien Stirnseite der Zugstange 18 anliegt.

Durch das Einsatzstück 24 und den Deformationskörper 25 führt eine zu der Zugstange 18 koaxiale Bohrung 27 hindurch, die einen bei dem Bund 26 beginnenden zylindrischen Abschnitt 28 aufweist. An den zylindrischen Abschnitt 28 schließt sich zur Mitte der Zugstange 18 hin gelegen ein Abschnitt 29 mit größerer lichter Weise an, der an einem Abschnitt 31 endet, der wiederum den Durchmesser des Abschnittes 28 hat. Etwa im Bereiche des Abschnittes 31 liegt der gedachte Übergang des Einsatzstückes 24 zu dem Deformationskörper 25, innerhalb dessen die Bohrung 27 einen sich kegelförmig erweiternden Abschnitt 32 bildet. Dabei ist die Erweiterung so gelegen, daß der Bereich mit dem kleinsten Durchmesser an den Abschnitt 31 angrenzt.

Zwischen dem Abschnitt 32 und dem Abschnitt 31 der Bohrung 27 ist in dem Formteil, das den Deformationskörper 25 und das Einsatzstück 24 bildet, eine in radialer Richtung offene Tasche 33 angeordnet, in die von der Seite her ein geschlossener Stahlring 34 eingesetzt ist, dessen Innenbohrung 35 den Durchmesser des Bohrungsabschnittes 28 hat.

In der Bohrung 27 steckt das Halteglied 19 mit seinem länglichen zylindrischen Schaft 36. Der zylindrische Schaft 36 ist den Verhältnissen in der jeweiligen Fahrzeugkarosserie entsprechend bei 37 abgewinkelt und es ist auf dem freien Ende des Schaftes 36 der pilzförmige Kopf 21 angestaucht.

Damit sich das Halteglied 19 in dem Einsatzstück 24 lediglich axial verschieben, jedoch nicht verdrehen kann, ist eine Verdrehsicherung vorgesehen, die aus einer in dem Bohrungsabschnitt 28 in axialer Richtung verlaufenden Nut 38 sowie einem radialen Fortsatz 39 besteht, der einstückig an den Schaft 36 angeformt ist. Dieser Fortsatz 39 ist eine durch Prägen erzeugte Ausstülpung bzw. ein "angequetschtes Ohr" mit etwa kreisförmiger Grundfläche, so daß sich eine etwa halbkreisförmige Vorwölbung ergibt.

Damit der Schaft 36 in das Einsatzstück 24 einschiebbar ist, öffnet sich sich die Nut 38 durch die den Bund 26 tragende Stirnseite des Einsatzstückes 24.

Der Bohrungsabschnitt 29 mit größerem Durchmesser ist ebenfalls von der Seite her über seine gesamte Länge offen, wie dies Fig. 2 erkennen läßt, um von der Seite her eine als Druckfeder wirkende Schraubenfeder 41 in den Abschnitt 29 einsetzen zu können. Die Schraubenfeder 41 dient dazu, das Halteglied 19 in eine Endlage bezüglich des Einsatzstückes 24 vorzuspannen, und zwar in die Endlage, in der das Halteglied 19 am weitesten vorgeschoben ist. Die Druckfeder 41 stützt sich hierzu an der innenliegenden Ringschulter 42 ab, die das innen liegende Ende des Bohrungsabschnittes 29 bildet.

Ein weiterer durch Anquetschen erzeugter radialer Fortsatz 43 bildet das auf dem Halteglied 19 sitzende Anschlagglied für die Druckfeder 41. Damit dieser Fortsatz 43 den Bohrungsabschnitt 28 passieren kann, ist in dem Bohrungsabschnitt 28 eine weitere in axialer Richtung verlaufende Nut 44 vorgesehen, die den Bohrungsabschnitt 28 in voller Länge bis hin zu dem Bohrungsabschnitt 29 durchsetzt.

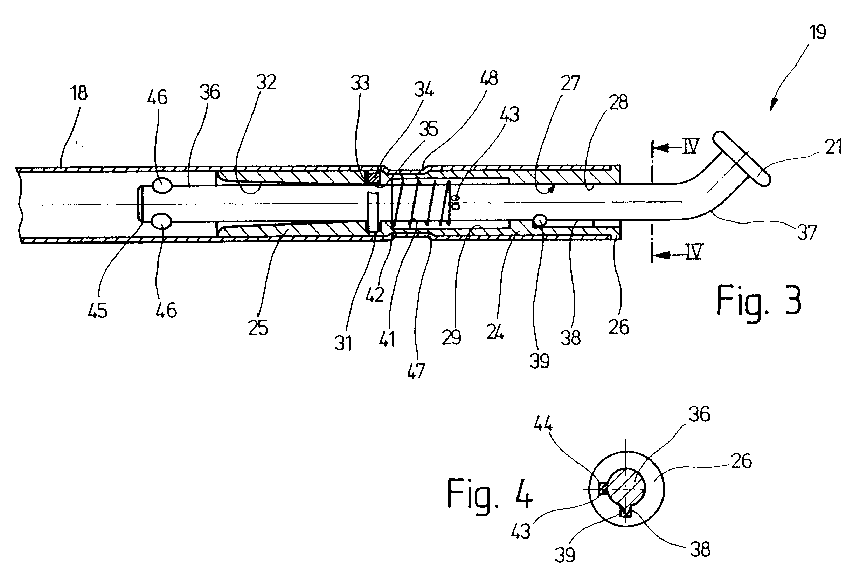

Wie die Fig. 3 erkennen läßt, hat der Schaft 36 eine Länge, die größer ist als die gesamte Länge des Formkörpers aus dem Einsatzstück 24 und dem Deformationskörper 25, so daß der Schaft 36 mit seinem innen liegenden Ende 45 aus der Bohrung 27 bzw. dem Deformationskörper 25 hervorsteht. An dem vorstehenden Ende 45 sind zwei sich diametral gegenüberliegende, radiale Fortsätze 46 angeformt, die wiederum durch Einprägen des Schaftes 36 entstanden sind, so daß der über die Außenumfangsfläche des Schaftes 36 vorstehende Teil etwa halbkreisförmige Gestalt hat. Diese beiden radialen Vorsprünge 46 bilden gleichzeitig die Anschlagglieder, die verhindern, daß das Halteglied 19 aus der Zugstange 18 herausfällt.

Um das Einsatzstück 24 in der Zugstange 18 axial zu sichern, ethält es in seinem Außenumfang insgesamt zwei taschenförmige Ausnehmungen 47, in die Sicken 48 eingreifen, die von außen her in das die Zugstange 18 bildende Rohr eingeprägt sind.

Die Montage der insoweit beschriebenen Zugstange 18 geschieht wie folgt:

An das mit dem pilzförmigen Kopf 21 und der Abwinklung 37 vorgefertigte Halteglied 19 werden die radialen Fortsätze 39 und 43 durch Prägen angeformt, nicht jedoch die beiden radialen Fortsätze 46, so daß im Anschluß an den radialen Fortzsatz oder Vorsprung 43 der Schaft 36 zylindrisch glatt bleibt.

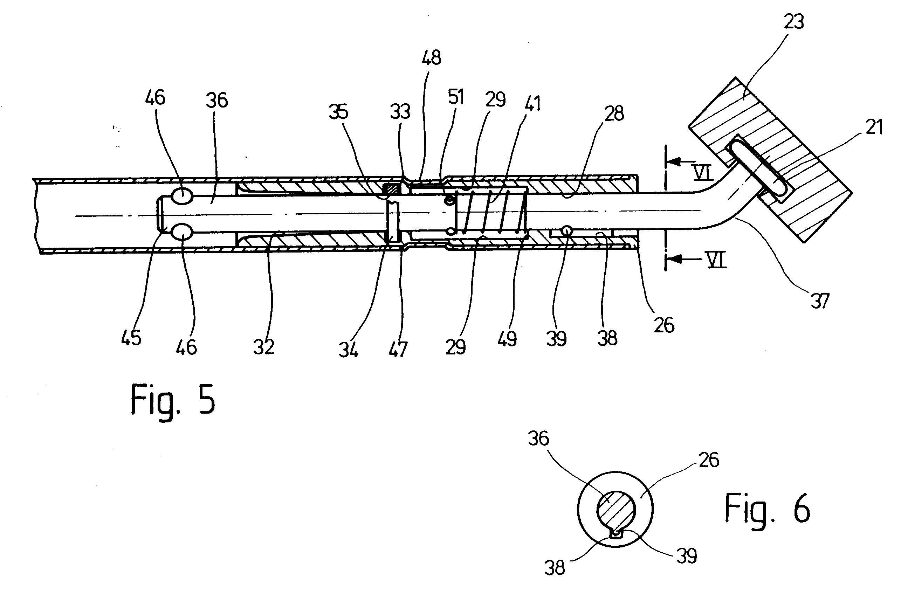

Sodann wird in den beispielsweise als Spritzgußteil hergestellten Formkörper, der das Einsatzstück 24 und den Deformationskörper 25 bildet, von der Flanke her durch die betreffende Öffnung die Druckfeder 41 in den Bohrungsabschnitt 29 eingesetzt und in entsprechender Weise wird der Stahlring 34 ebenfalls in die Zugehörige Aufnahmetasche radial bezüglich der Bohrung 27 eingeschoben. Anschließend wird von der den Bund 26 tragenden Stirnseite her der Schaft 36 des Haltegliedes 19 eingeführt, wobei der radiale Vorsprung 43 durch die Nut 44 in den Bohrungsabschnitt 29 gleitet. Gleichzeitig gelangt der radiale Vorsprung 39 in die Nut 38, um das Halteglied 19 bezüglich des Einsatzstückes 29 gegen Verdrehen zu sichern. Damit ist insoweit die in Fig. 4 dargestellte Anordnung erreicht. Nun wird in einer entsprechenden Vorrichtung das hintere Ende 45 geprägt, um die beiden radialen Fortsätze oder Ausstülpungen 46 zu erzeugen. Der äußere Abstand, den die beiden radialen Fortsätze 46 voneinander haben, ist größer als die größte lichte Weite des kegeligen Bohrungsabschnittes 32. Das Halteglied 19 kann somit nicht mehr aus dem Einsatzstück 24 herausfallen.

Die vorgefertigte Montagegruppe, bestehend aus dem Einsatzstück 24 und dem Halteglied 19,wird jetzt in das die Zugstange 18 bildende Rohr eingesteckt, bis der Bund 46 an der Stirnseite des Rohres anliegt. Dann werden die Sicken 48 in die beiden taschenförmigen Ausnehmungen 47 eingeprägt, womit das Einsatzstück 24 und der damit einstückig verbundene Deformationskörper 25 in der Zugstange 18 fixiert sind.

Die insoweit beschriebene Anordnung kann entweder an beiden Enden der Zugstange 18 oder lediglich an einem Ende vorgesehen sein, während an dem anderen Ende das Halteglied 19 starr und unverschieblich unmittelbar mit dem die Zugstange 18 bildenden Rohr verbunden ist.

Die Zugstange 18 wird schließlich in bekannter Weise an dem Sicherheitsnetz 14 befestigt.

Im normalen Gebrauch ist vorgesehen, daß das Sicherheitsnetz 14 entgegen der Kraft der Wickelwelle aus dem Gehäuse 15 herausgezogen wird, und die Zugstange 18 mit den beiden Haltegliedern 19 in die entsprechenden Taschen 23 eingehängt wird. Dazu müssen gegen die Kraft der Feder, je nach Ausführungsform, entweder eines oder beide Halteglieder 19 ein Stück weit eingeschoben werden. Fig. 3 zeigt die vollständig eingeschobene Position, in der der radiale Fortsatz 39 an dem innenliegenden Ende der Nut 38 anstößt.

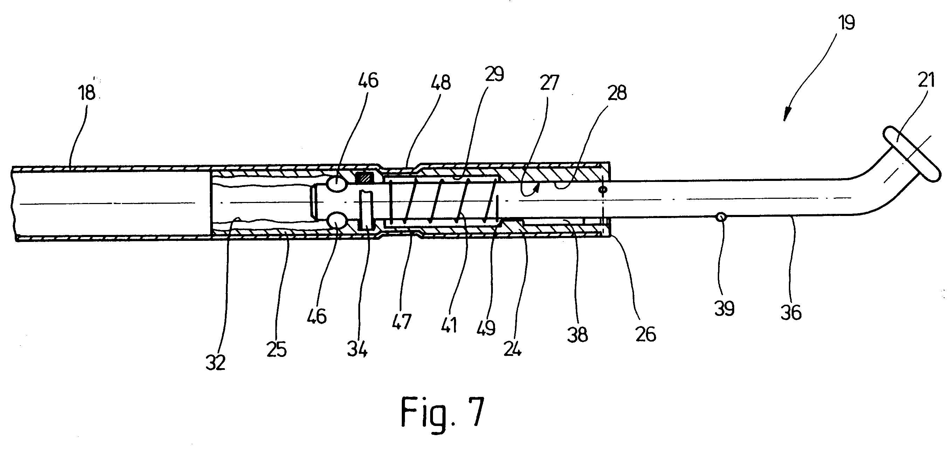

Wenn bei einem Auffahrunfall Gegenstände aus dem Laderaum gegen das Sicherheitsnetz 14 geschleudert werden, verbiegt sich unter der Wucht des Aufpralls die Zugstange 18. Hierdurch wird bereits ein Teil der kinetischen Energie in Verformungsarbeit umgesetzt. Gleichzeitig verkürzt sich der Abstand zwischen den Enden der Zugstange 18 und die Schäfte 36 der Halteglieder 19 bekommen eine Komponente in Bewegungsrichtung der gegen das Netz 14 geschleuderten Last. Falls durch das Verbiegen der Zugstange 18 noch nicht die gesamte kinetische Energie aufgebraucht ist, beginnen nun die radialen Fortsätze 46 sich zunehmend einen Weg durch den Deformationskörper 25 zu bahnen, indem sie sich in die Wand des kegeligen Bohrungsabschnittes 32 eingraben und in Richtung auf den Stahlring 34 gleiten. Dieser Vorgang ist in Fig. 7 im Zusammenhang mit einer etwas modifizierten Anordnung veranschaulicht. Die Verformung des Deformationskörpers 25 setzt weiter kinetische Energie des auf das Sicherheitsnetz 14 prallenden Gegenstandes in Verformungsarbeit um und wirkt somit als Energie aufzehrendes Mittel.

Der Stahlring 34 hat die Aufgabe, mit großer Sicherheit zu verhindern, daß das oder die Halteglieder 19 vollends aus dem Zugstab 18 herausrutschen können. Seine lichte Weite entspricht dem Außendurchmesser des Schaftes 36,und die radialen Fortsätze 46 vermögen nicht durch den Stahlring 34 hindurchzugelangen. Erst bei extrem hohen Zugkräften, die allerdings jenseits desjenigen Bereiches liegen, der nach den Sicherheitsvorschriften zu beachten ist, könnte es geschehen, daß die radialen Fortsätze 46 vom dem Stahlring 34 abgeschert werden oder sich der Stahlring 34 entsprechend verformt.

Da der Stahlring 34, bezogen auf die Sicken 48, innen liegt, wird er in jedem Falle unabhängig von der Nachgiebigkeit des Einsatzstückes 24 festgehalten.

Das Einsatzstück 24 und der Deformationskörper 25 können aus geeigneten Thermoplasten, wie Polypropylen, Nylon u.dgl. hergestellt werden. Die Durchgangsbohrung 27 kann bezüglich des Durchmessers des Schaftes 36 sehr genau toleriert werden, Womit Klappergeräusche weitgehend vermieden sind. Außerdem läßt sich dadurch sehr genau die Kraft programmieren, die der Deformationskörper 25 dem gewaltsamen Herausziehen des Haltegliedes 19 entgegensetzt. Exemplarstreuungen sind auf diese Weise auf eine sehr schmale Bandbreite eingeengt, was die Zuverlässigkeit des Sicherheitsnetzes deutlich erhöht. Außerdem ist die Fertigung wesentlich vereinfacht, weil das Gebilde aus Einsatzstück 24 und Halteglied 19 vorgefertigt werden kann. Die Sicken 48 haben bei der neuen Ausführungsform der Sicherheitsnetzanordnung 13 keinen Einfluß auf die Funktion.

Das in den Fig. 5, 6 und7 gezeigte Ausführungsbeispiel unterscheidet sich von dem oben erläuterten Ausführungsbeispiel im wesentlichen nur dadurch, daß die Feder 41 so angeordnet ist, daß sie bestrebt ist, das Halteglied 19 so weit wie möglich nach innen in die Zugstange 18 hineinzuziehen. Zu diesem Zweck liegt die Schraubenfeder 41 so, daß sie sich an jener Schulter 49 abstützt, an der der Bohrungsabschnitt 29 in den Bohrungsabschnitt 28 übergeht. Das schaftseitige Widerlager für die Druckfeder 41 bildet ein Zylinderstift 51, der durch eine Querbohrung in den Schaft 36 hindurch führt. Die Bohrung für den Zylinderstift 51 ist an einer entsprechenden Stelle angebracht.

Der Zylinderstift 51 wird bei der Montage nachträglich von der seitlichen Öffnung her, die in den Bohrungsabschnitt 29 mündet, eingesetzt. Nuten, wie sie der Nut 44 entsprechen, sind entfallen, und bei einem Unfall werden die überstehenden Teile des Zylinderstiftes 51 abgeschert, wie dies Fig. 7 schematisch veranschaulicht.

Die übrigen Bauteile entsprechen den Bauteilen nach dem vorhergehenden Ausführungsbeispiel und sind mit denselben Bezugszeichen belegt.

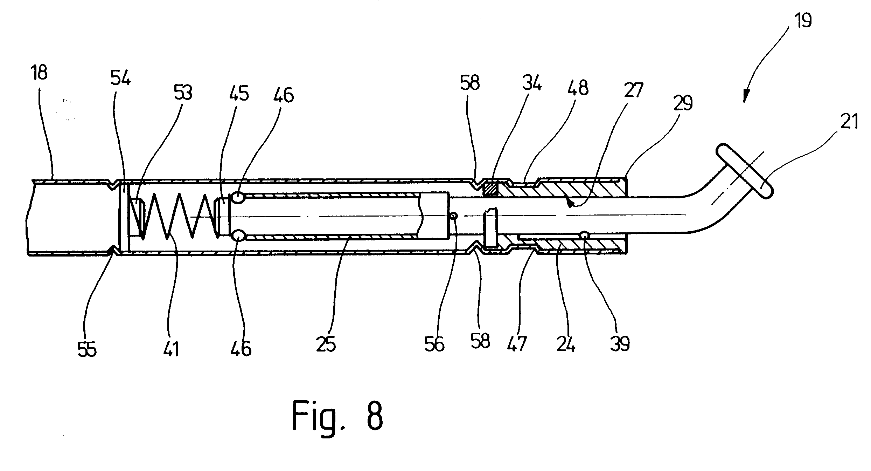

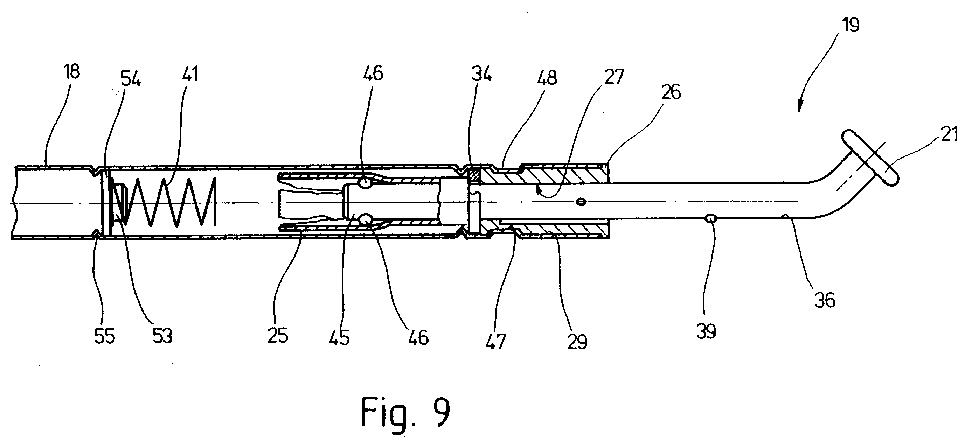

Bei der Ausführungsform nach den Fig. 8 und 9 ist der Deformationskörper 25 als separates Stahlrohr ausgebildet, das von dem Einsatzstück 24 getrennt ist. Soweit bei dem Ausführungsbeispiel nach den Fig. 8 und 9 Bauteile auftreten, die funktionsmäßig den Bauteilen nach den vorhergehenden Ausführungsbeispielen entsprechen, sind dieselben Bezugszeichen verwendet.

Wie ersichtlich, endet das Einsatzstück 24 etwa an jener Stelle, an der bei den vorherigen Ausführungsbeispielen das innenliegende Ende des Bohrungsabschnittes 28 gelegen ist. Die taschenförmigen Ausnehmungen 47 sind entsprechend weit nach vorne verlegt, und der Stahlring 34 liegt unmittelbar an der innenliegenden Stirnseite des Einsatzstückes 24 an.

Die Druckfeder 41 wirkt auf das hintere Ende 45 des Schaftes 36 und als Widerlager dient ihr eine mit einem zentralen Fortsatz 53 versehene Platte 54, die sich auf in der Zugstange 18 eingeprägten Sicken 55 abstützt. Das andere Ende der Druckfeder 41 liegt gegen die beiden radialen Vorsprünge 46 an.

Der Zusammenbau des Ausführungsbeispielen nach den Fig. 8 und 9 erfolgt in der Weise, daß zunächst auf den mit dem radialen Vorsprung 39 vorgesehenen Schaft 36 das Einsatzstück 24 und sodann der Stahlring aufgeschoben werden. Anschließend wird in eine entsprechende Querbohrung ein Stift 56 eingesteckt, ehe von dem hinteren Ende der Deformationskörper 25 in Gestalt eines Stahlrohrstückes aufgeschoben wird. Anschließend werden die radialen Vorsprünge 46 durch Prägen erzeugt.

Die Schraubenfeder 41 hat vorzugsweise eine etwas geringere lichte Weite als es dem Durchmesser des Schaftes 36 entspricht, damit sie auf das hintere Ende 45 aufgeschoben werden kann und dort reibschlüssig hält. Schließlich wird in die Schraubenfeder 41 ebenfalls mit geringem Kraftaufwand der Fortsatz 53 eingesteckt.

Nachdem in dem Zugstab 18 zunächst die Sicken 55 hergestellt sind, wird das vorgefertigte Gebilde in den Zugstab 18 ein Stück weit eingesteckt. Sodann werden im Abstand von den Sicken 55 weitere Sicken 58 eingeprägt, die als Anlage für den Stahlring 34 dienen. Nach dem Einprägen der Sicken 58 wird das Einsatzstück 24 vollends eingeschoben, bis sein Bund 26 an dem Zugstab 18 anliegt. Daraufhin werden die Sicken 48 zum Fixieren des Einsatzstückes eingeprägt. Der Stahlring 34 liegt jetzt spielfrei zwischen den Sicken 58 und der innenliegenden Stirnseite des Einsatzstückes 24.

Bei einem Aufprall wird der Schaft 36 aus dem Zugstab 18 herausgerissen, was dazu führt, daß die radialen Vorsprünge 46 in das Stahlrohr 25 eindringen und es dabei verformen. Während dieser Verformung legt sich das Stahlrohr 25, das den Deformationskörper darstellt, an dem Stahlring 34 an, der sich auf dem Einsatzstück 24 abstützt, das mit Hilfe der Sicken 48 in dem Zugstab 18 fixiert ist.

Beim Herausreißen des Haltegliedes 19 aus dem Zugstab 18 wird der Stift 46 an dem Stahlring 34 abgeschert.

Wie vorher wird auf diese Weise kinetische Energie in Verformungsarbeit des Deformationskörpers 25 umgesetzt.

## Patentansprüche

1. Sicherheitsnetzanordnung zum Schutz des Fahrgastraumes von Kombi-PKW gegenüber dem Laderaum,
mit einem zwei im wesentlichen zueinander parallele Kanten (16) aufweisenden Sicherheitsnetz (14),
mit einer der einen Kante zugeordneten Befestigungseinrichtung (15), um das Sicherheitsnetz (14) in dem Bereich dieser Kante mit dem PKW zu verbinden,
mit einer an der anderen Kante (16) befestigten stabförmigen Befestigungseinrichtung (18), die an wenigstens einem ihrer Enden einen länglichen Hohlraum enthält, der von dem betreffenden Ende her in die Befestigungseinrichtung (18) führt und dessen Längsachse zu der Längsachse der Befestigungseinrichtung (18) koaxial ist,
mit einem in dem Hohlraum steckenden rohrförmigen Einsatzstück (24), das in dem Hohlraum befestigt ist, und
mit einem einen Schaft (36) aufweisenden Halteglied (19), das mit seinem Schaft (36) längsverschieblich in dem Innenraum des Einsatzstücks (24) steckt und dessen aus der Befestigungseinrichtung (18) ragendes Ende des Schaftes (36) ein Verankerungsglied (21) trägt, das in eine in dem PKW ortsfeste Aufnahmeeinrichtung (23) einzusetzen ist,
mit einem zwischen dem Einsatzstück (24) und dem Halteglied (19) wirksamen Federglied (41), durch das das Halteglied (19) bezüglich des Einsatzstücks (24) in eine Endlage vorgespannt ist.

2. Sicherheitsnetzanordnung nach Anspruch 1, dadurch gekennzeichnet, daß Energie verzehrende Mittel (25) vorgesehen sind.

3. Sicherheitsnetzanordnung nach Anspruch 2, dadurch gekennzeichnet, daß die Energie verzehrenden Mittel (25) kinematisch zwischen der Befestigungseinrichtung (18) und dem Halteglied (19) angeordnet sind.

4. Sicherheitsnetzanordnung nach Anspruch 1, dadurch gekennzeichnet, daß die den Hohlraum enthaltende Befestigungseinrichtung (18) ein Rohr ist.

5. Sicherheitsnetzanordnung nach Anspruch 4, dadurch gekennzeichnet, daß, das Rohr zylindrisch ist.

6. Sicherheitsnetzanordnung nach Anspruch 1, dadurch gekennzeichnet, daß die Öffnung (27) in dem Einsatzstück (24) im wesentlichen zylindrisch ist.

7. Sicherheitsnetzanordnung nach Anspruch 6, dadurch gekennzeichnet, daß die Öffnung (27) in dem Einsatzstück (24) einen im Durchmesser erweiterten Abschnitt (29) zur Aufnahme des Federgliedes (41) aufweist.

8. Sicherheitsnetzanordnung nach Anspruch 7, dadurch gekennzeichnet, daß der erweiterte Abschnitt (29) sich zu beiden Enden hin verjüngt und daß der erweiterte Abschnitt (29) eine seitliche Öffnung zum Einsetzen des Federgliedes (41) aufweist.

9. Sicherheitsnetzanordnung nach Anspruch 1, dadurch gekennzeichnet, daß das Halteglied (19) in dem Einsatzstück (24) drehgesichert ist.

10. Sicherheitsnetzanordnung nach Anspruch 1, dadurch gekennzeichnet, daß zur Drehsicherung das Einsatzstück (24) eine in Längsrichtung sich erstreckende und zu der Öffnung (27) hin offfene Nut (38) aufweist und daß das Halteglied (19) einen in die Nut (38) eingreifenden radialen Fortsatz (39) trägt.

11. Sicherheitsnetzanordnung nach Anspruch 10, dadurch gekennzeichnet, daß der radiale Fortsatz (39) eine durch Einprägen entstanden Ausstülpung ist.

12. Sicherheitsnetzanordnung nach Anspruch 10, dadurch gekennzeichnet, daß die Nut (38) zum äußeren Ende des Einsatzstückes (24) hin offen ist.

13. Sicherheitsnetzanordnung nach Anspruch 1, dadurch gekennzeichnet, daß das Einsatzstück (24) in seiner Außenumfangsfläche wenigstens eine Vertiefung (47) gegebenenfalls in Gestalt einer umlaufenden Nut enthält und daß in die Befestigungseinrichtung (18) im Bereich der Vertiefung (47) wenigstens eine Sicke (48) eingeprägt ist, durch die das Einsatzstück (24) in der Befestigungseinrichtung (18) axial gesichert ist.

14. Sicherheitsnetzanordnung nach Anspruch 1, dadurch gekennzeichnet, daß das Einsatzstück (24) an seinem im eingesteckten Zustand außen liegenden Ende einen radial vorspringenden Bund (26) aufweist.

15. Sicherheitsnetzanordnung nach Anspruch 1, dadurch gekennzeichnet, daß als Energie verzehrendes Mittel (25) in dem Hohlraum ein rohrförmiger Deformationskörper vorgesehen ist, durch den der Schaft (36) des Haltegliedes (19) hindurchführt, der auf seinem über den Deformationskörper (25) hinausstehenden und von dem Einsatzstück (24) abliegenden Ende (45) mit wenigstens einem radialen Fortsatz (46) versehen ist, derart, daß das Halteglied (19) nur unter Deformation des Deformationskörpers (25) aus diesem herausziehbar ist.

16. Sicherheitsnetzanordnung nach Anspruch 15, dadurch gekennzeichnet, daß der Deformationskörper (25) und das Einsatzstück (24) miteinander vorzugsweise einstückig verbunden sind.

17. Sicherheitsnetzanordnung nach Anspruch 15, dadurch gekennzeichnet, daß zwischen dem Deformationskörper (25) und dem Einsatzstück (24) ein Anschlagring (34) angeordnet ist.

18. Sicherheitsnetzanordnung nach Anspruch 17, dadurch gekennzeichnet, daß der Anschlagring (34) vom Ende der Befestigungseinrichtung (18) aus gesehen hinter der wenigstens einen Sicke (48) liegt.

19. Sicherheitsnetzanordnung nach Anspruch 17, dadurch gekennzeichnet, daß bei einstückiger Ausführung des Deformationskörpers (25) und des Einsatzstückes (24) der Anschlagring (34) in einer Tasche (33) liegt.

20. Sicherheitsnetzanordnung nach Anspruch 15, dadurch gekennzeichnet, daß der radiale Fortsatz (46) von einer vorzugsweise wenigstens zwei Ausstülpungen des Schaftes (36) des Halteglieds (19) gebildet ist.

21. Sicherheitsnetzanordnung nach Anspruch 15, dadurch gekennzeichnet, daß das Einsatzstück (24) und/oder der Deformationskörper (25) ein Spritzteil oder Spritzteile sind.

22. Sicherheitsnetzanordnung nach Anspruch 15, dadurch gekennzeichnet, daß der Deformationskörper (25) ein Metallrohr vorzugsweise ein Stahlrohr ist.

23. Sicherheitsnetzanordnung nach Anspruch 15, dadurch gekennzeichnet, daß sich die Öffnung (32) in dem Deformationskörper (25) in Richtung von dem Einsatzstück (24) weg geringfügig kegelförmig erweitert.

## Claims

1. Security net installation for protecting the passenger compartment of estate cars relative to the luggage compartment,
with a security net (14) having two edges (16) which are substantially parallel to one another,
with a fixing arrangement (15) associated with one edge in order to connect the security net (14) to the estate car in the region of this edge,
with a bar-like fixing arrangement (18) which is fixed on the other edge (16) and contains at least at one of its ends an elongated cavity which leads from the end in question into the fixing arrangement (18) and of which the longitudinal axis is coaxial with the longitudinal axis of the fixing arrangement (18),
with a tubular insert (24) which goes into the cavity and is fixed in the cavity, and
with a retaining member (19) which has a shank (36) and which with its shank (36) fits displaceably into the interior of the insert (24), the end of the shank (36) which projects out of the fixing arrangement (18) bearing an anchoring member (21) which is to be inserted into a receptacle (23) fixed in the estate car,
with a spring member (41) which acts between the insert (24) and the retaining member (19) and by which the retaining member (19) is pretensioned in an end position with regard to the insert (24).

2. Security net installation as claimed in Claim 1, characterised in that energy-absorbing means (25) are provided.

3. Security net installation as claimed in Claim 2, characterised in that the energy-absorbing means (25) are disposed kinematically between the fixing arrangement (18) and the retaining member (19).

4. Security net installation as claimed in Claim 1, characterised in that the fixing arrangement (18) containing the cavity is a tube.

5. Security net installation as claimed in Claim 4, characterised in that the tube is cylindrical.

6. Security net installation as claimed in Claim 1, characterised in that the opening (27) in the insert (24) is substantially cylindrical.

7. Security net installation as claimed in Claim 6, characterised in that the opening (27) in the insert (24) has a portion (29) which is widened in diameter in order to receive the spring member (41).

8. Security net installation as claimed in Claim 7, characterised in that the widened portion (29) tapers towards both ends and that the widened portion (29) has a lateral opening for the insertion of the spring member (41).

9. Security net installation as claimed in Claim 1, characterised in that the retaining member (19) is secured against rotation in the insert (24).

10. Security net installation as claimed in Claim 1, characterised in that for securing against rotation the insert (24) has a groove (38) which extends in the longitudinal direction and is open towards the opening (27) and that the retaining member (19) bears a radial extension (39) which engages in the groove (38).

11. Security net installation as claimed in Claim 10, characterised in that the radial extension (39) is a protuberance produced by stamping.

12. Security net installation as claimed in Claim 10, characterised in that the groove (38) is open towards the outer end of the insert (24).

13. Security net installation as claimed in Claim 1, characterised in that the insert (24) contains in its outer circumferential surface at least one depression (47), if appropriate in the shape of a circumferential groove, and that at least one bead (48) is stamped into the fixing arrangement (18) in the region of the depression (47) and axially secures the insert (24) in the fixing arrangement (18).

14. Security net installation as claimed in Claim 1, characterised in that the insert (24) has a radially projecting flange (26) on its end which lies outside in the inserted state.

15. Security net installation as claimed in Claim 1, characterised in that a tubular deformation body is provided as energy-absorbing means (25) in the cavity and has passing through it the shank (36) of the retaining member (19) which is provided with at least one radial extension (46) on its end (45) which projects beyond the deformation body (25) and is spaced from the insert (24), in such a way that the retaining member (19) can only be withdrawn therefrom by deformation of the deformation body.

16. Security net installation as claimed in Claim 15, characterised in that the deformation body (25) and the insert (24) are connected to one another, preferably integrally.

17. Security net installation as claimed in Claim 15, characterised in that a stop ring (34) is disposed between the deformation body (25) and the insert (24).

18. Security net installation as claimed in Claim 17, characterised in that the stop ring (34) lies behind the at least one bead (48) when viewed from the end of the fixing arrangement (18).

19. Security net installation as claimed in Claim 17, characterised in that with integral construction of the deformation body (25) and the insert (24) the stop ring (34) lies in a recess (33).

20. Security net installation as claimed in Claim 15, characterised in that the radial extension (46) is formed by one of preferably at least two protuberances on the shank (36) of the retaining member (19).

21. Security net installation as claimed in Claim 15, characterised in that the insert (24) and/or the deformation body (25) is an injection moulded part or are injection moulded parts.

22. Security net installation as claimed in Claim 15, characterised in that the deformation body (25) is a metal tube, preferably a steel tube.

23. Security net installation as claimed in Claim 15, characterised in that the opening (32) in the deformation body (25) widens slightly conically in the direction away from the insert (24).

## Revendications

1. Système de filet de sécurité destiné à protéger l'habitacle par rapport au coffre dans des véhicules automobiles de type break,
avec un filet de sécurité (14) qui présente deux bords (16) essentiellement mutuellement parallèles,
avec un dispositif de fixation (15) associé à l'un des bords aux fins de relier le filet de sécurité (14) au véhicule dans la région de ce bord,
avec un dispositif de fixation (18) en forme de barre fixé à l'autre bord (16), qui comporte à une de ses extrémités au moins une cavité allongée qui s'étend depuis l'extrémité concernée jusque dans le dispositif de fixation (18) et dont l'axe longitudinal est coaxial à l'axe longitudinal du dispositif de fixation (18).
avec un insert tubulaire (24) monté dans la cavité qui est fixé dans ladite cavité et
avec un élément de retenue (19) pourvu d'une tige (36), élément qui est monté par sa tige (36) de manière à pouvoir coulisser dans la chambre intérieure de l'insert (24) et dont l'extrémité de tige (36) sortant du dispositif de fixation (18) porte un élément d'ancrage (21) destiné à être engagé dans un dispositif récepteur (23) stationnaire dans le véhicule,
avec un élément élastique (41) qui agit entre l'insert (24) et l'élément de retenue (19) et par lequel l'élément de retenue (19) est précontraint dans sa position extrême vis-à-vis de l'insert (24).

2. Système de filet de sécurité selon la revendication 1, caractérisé par le fait que des moyens (25) d'absorption d'énergie sont prévus.

3. Système de filet de sécurité selon la revendication 2, caractérisé par le fait que les moyens (25) d'absorption d'énergie sont disposés sur le plan cinématique entre le dispositif de fixation (18) et l'élément de retenue (19).

4. Système de filet de sécurité selon la revendication 1, caractérisé par le fait que le dispositif de fixation (18) contenant la cavité est un tube.

5. Système de filet de sécurité selon la revendication 4, caractérisé par le fait que le tube est cylindrique.

6. Système de filet de sécurité selon la revendication 1, caractérisé par le fait que l'ouverture (27) de l'insert (24) est essentiellement cylindrique.

7. Système de filet de sécurité selon la revendication 6, caractérisé par le fait que l'ouverture (27) de l'insert (24) comporte un tronçon (29) à diamètre augmenté destiné à recevoir l'élément élastique (41).

8. Système de filet de sécurité selon la revendication 7, caractérisé par le fait que le tronçon (29) à diamètre augmenté est resserré aux deux extrémités et par le fait que le tronçon (29) à diamètre augmenté comporte une ouverture latérale pour le montage de l'élément élastique (41).

9. Système de filet de sécurité selon la revendication 1, caractérisé par le fait que l'élément de retenue (19) est immobilisé en rotation dans l'insert (24).

10. Système de filet de sécurité selon la revendication 1, caractérisé par le fait que l'insert (24) comporte à des fins d'immobilisation en rotation, une rainure (38) qui s'étend dans la direction longitudinale et est ouverte en direction de l'ouverture (27) et par le fait l'élément de retenue (19) porte une saillie (39) radiale qui s'engage dans la rainure (38).

11. Système de filet de sécurité selon la revendication 10, caractérisé par le fait que la saillie radiale (39) est un renflement obtenu par estampage.

12. Système de filet de sécurité selon la revendication 10, caractérisé par le fait que la rainure (38) est ouverte en direction de l'extrémité extérieure de l'insert (24).

13. Système de filet de sécurité selon la revendication 1, caractérisé par le fait que l'insert (24) comporte sur sa surface périphérique extérieure au moins une cavité (47), le cas échéant sous la forme d'une rainure circulaire, et par le fait qu'au moins une moulure (48) par laquelle l'insert (24) est bloqué axialement dans le dispositif de fixation (18) est formée dans le dispositif de fixation (18) dans la région de la cavité (47).

14. Système de filet de sécurité selon la revendication 1, caractérisé par le fait que l'insert (24), à son extrémité qui à l'état monté est située à l'extérieur, comporte un collet (26) qui fait saillie radialement.

15. Système de filet de sécurité selon la revendication 1, caractérisé par le fait qu'il est prévu dans la cavité, comme moyen d'absorption d'énergie (25), un corps déformable tubulaire dans lequel pénètre la tige (36) de l'élément de retenue (19) qui, à son extrémité (45) sortant du corps déformable (25) éloignée de l'insert (24), porte au moins une saillie radiale (46) telle que l'élément de retenue (19) ne peut être sorti du corps déformable (25) que moyennant une déformation dudit corps déformable.

16. Système de filet de sécurité selon la revendication 15, caractérisé par le fait que le corps de déformation (25) et l'insert (24) sont liés l'un à l'autre, de préférence forment une seule pièce.

17. Système de filet de sécurité selon la revendication 15, caractérisé par le fait qu'une bague de butée (34) est disposée entre le corps déformable (25) et l'insert (24).

18. Système de filet de sécurité selon la revendication 17, caractérisé par le fait que la bague de butée (34) est située derrière la moulure (48) au nombre d'au moins une, vu depuis l'extrémité du dispositif de fixation (18).

19. Système de filet de sécurité selon la revendication 17, caractérisé par le fait que lorsque le corps déformable (25) et l'insert (24) sont réalisés d'une pièce, la bague de butée (34) est disposée dans un logement (33).

20. Système de filet de sécurité selon la revendication 15, caractérisé par le fait que la saillie radiale (46) est formée par un, de préférence par deux, renflements de la tige (36) de l'éléments de retenue (19).

21. Système de filet de sécurité selon la revendication 15, caractérisé par le fait que l'insert (24) et/ou le corps déformable (25) est un élément moulé par injection ou sont des éléments moulés par injection.

22. Système de filet de sécurité selon la revendication 15, caractérisé par le fait que le corps déformable (25) est un tube métallique, de préférence un tube en acier.

23. Système de filet de sécurité selon la revendication 15, caractérisé par le fait que l'ouverture (32) dans le corps déformable (25) est légèrement évasée en forme de cône dans la direction opposée à l'insert (24).
